# EUROPÄISCHE PATENTSCHRIFT

(11) **EP 2 394 041 B1**
(45) Veröffentlichungstag und Bekanntmachung des Hinweises auf die Patenterteilung: **17.06.2015**
(21) Anmeldenummer: 10705781.2
(22) Anmeldetag: 02.02.2010
(51) Int. Cl.: F02D 23/00, F02B 37/013, F02B 37/16, F02B 37/18

(54) **BRENNKRAFTMASCHINE**
INTERNAL COMBUSTION ENGINE
MOTEUR À COMBUSTION INTERNE

(30) Priorität: 03.02.2009 AT 1822009
(43) Veröffentlichungstag der Anmeldung: 14.12.2011
(73) Patentinhaber: GE Jenbacher GmbH & Co OHG, 6200 Jenbach (AT)
(72) Erfinder: GUGGENBERGER, Thomas, A-6200 Buch bei Jenbach (AT); HAIDN, Markus, 94133 Röhrnbach (DE); KLAUSNER, Johann, A-6391 St. Jakob i.H. (AT)
(74) Vertreter: Gangl, Markus
(86) Internationale Anmeldenummer: PCT/AT2010/000033
(87) Internationale Veröffentlichungsnummer: WO 2010/088710

(56) Entgegenhaltungen:
- EP-A1- 1 519 017
- EP-A1- 1 669 571
- EP-A1- 1 950 388
- EP-A2- 1 905 988
- WO-A1-2005/024201
- WO-A1-2007/081342
- DE-A1-102007 017 828
- FR-A1- 2 908 475

## Beschreibung

Die Erfindung betrifft ein Verfahren zum Regeln einer Brennkraftmaschine, wobei auf eine Motorregelgröße nachgeführt wird, wobei die Brennkraftmaschine wenigstens eine erste Verdichtungseinrichtung und wenigstens eine zur ersten Verdichtungseinrichtung seriell angeordnete zweite Verdichtungseinrichtung aufweist, die ein Fluid verdichten. Weiters betrifft die Erfindung eine Brennkraftmaschine, umfassend wenigstens eine erste Verdichtungseinrichtung und wenigstens eine zweite Verdichtungseinrichtung, die zur ersten Verdichtungseinrichtung seriell angeordnet ist. Darüber hinaus betrifft die Erfindung eine Regeleinrichtung zur Durchführung des Verfahrens und für eine vorgenannte Brennkraftmaschine.

Zur Leistungssteigerung ist es bei Brennkraftmaschinen bekannt, Verdichtungseinrichtungen im Einlasstrakt in Serie zu schalten, um in zwei Verdichtungsschritten das zugeführte verdichtete Gas auf einen hohen Druck zu bringen. Zwischen den Verdichtern wird dabei regelmäßig eine Zwischenkühlung vorgenommen, sodass im zweiten Verdichter eine höhere Gasmenge umgesetzt werden kann. Um eine gewisse Regelreserve zur Verfügung zu haben, ist es beispielsweise aus der EP 1 640 598 A1 bereits bekannt, vor der zweiten Verdichtungseinrichtung, dem sogenannten Hochdruckverdichter, eine Verzweigung vorzusehen, um das verdichtete Gas am Hochdruckverdichter vorbeizuführen.

Obwohl man beim Stand der Technik Laständerungen an der Brennkraftmaschine rasch begegnen kann, ist die Dauer zur Nachführung auf die Motorregelgröße relativ lang und man kann ein Schwingungsverhalten um den Sollwert herum beobachten.

Aufgabe der vorliegenden Erfindung ist es daher, ein Verfahren der eingangs genannten Gattung bereitzustellen, bei dem diese Probleme vermindert sind. Auch soll eine Brennkraftmaschine der eingangs genannten Gattung sowie eine dafür vorgesehene Regeleinrichtung bereitgestellt werden, wo diese Probleme vermindert sind.

Gelöst wird diese Aufgabe durch ein Verfahren zum Regeln einer Brennkraftmaschine auf einem im Wesentlichen konstanten Motorparameter, wobei die Brennkraftmaschine wenigstens eine erste Verdichtungseinrichtung und wenigstens eine zweite Verdichtungseinrichtung, die zur ersten Verdichtungseinrichtung seriell angeordnet ist, aufweist, welches dadurch gekennzeichnet, dass zur Nachführung auf die Motorregelgröße als Stellgröße eine bestimmte Fluidmenge um zumindest eine der zumindest zwei Verdichtungseinrichtung über wenigstens eine Bypassleitung zurückgeführt wird.

Im Normalbetrieb wird eine gewisse verdichtete Fluidmenge (in der Regel verdichtetes Gas wie Luft oder ein Treibstoff/Luftgemisch) ständig um die Verdichtungseinrichtung zirkuliert, d.h. es wird nicht die gesamte verdichtete Fluidmenge in den Brennraum der Brennkraftmaschine eingeführt, sondern eine bestimmte Menge wieder vor den Hochdruckverdichter rückgeführt. Beim Auftreten einer Laständerung, kann einerseits durch Verringern der umgeblasenen Fluidmenge eine größere verdichtete Fluidmenge in den Brennraum eingeführt werden, andererseits durch Vergrüßern der umgeblasenen Fluidmenge eine geringere verdichtete Fluidmenge in den Brennraum eingeführt werden. Im Gegensatz zu den Verfahren, bei denen das verdichtete Gas an einer Verdichtungseinrichtung vorbeigeleitet wird, hat das gegenständliche Verfahren den Vorteil, dass nicht nur die Regelreserve größer ist, sondern auch die Nachführung auf die zu regelnde Größe rascher erfolgt.

Im bevorzugten Fall ist vorgesehen, dass zur Nachführung auf die Motorregelgröße als Stellgröße eine bestimmte Fluidmenge um die zumindest zwei Verdichtungseinrichtungen über Bypassleitungen zurückgeführt wird, sodass sich die Regelreserve und die Regelgenauigkeit erhöhen.

Bei einer Brennkraftmaschine der eingangs genannten Gattung wird diese Aufgabe gelöst, indem um wenigstens eine Verdichtungseinrichtung zumindest eine Bypassleitung führt und wobei in der zumindest einen Bypassleitung zumindest ein regelbares Ventil angeordnet ist, sodass die um die Verdichtungseinrichtung rückführbare Fluidmenge regelbar ist, wobei der wenigstens einen Verdichtungseinrichtung wenigstens eine Kühleinrichtung nachgeordnet ist. Die Bypassleitungen zweigen in Strömungsrichtung des Fluids nach der Kühleinrichtung der jeweiligen Verdichtungseinrichtung ab. Durch die Kühlung des Fluids wird der Dichteunterschied vergrößert, sodass eine größere Fluidmenge über die Bypassleitung vor den Verdichter rückführbar ist.

Bevorzugt ist dabei vorgesehen, dass um die erste Verdichtungseinrichtung und um die zweite Verdichtungseinrichtung Bypassleitungen führen und wobei in den Bypassleitungen regelbare Ventile angeordnet sind, sodass die um jede Verdichtungseinrichtung mittels der Bypassleitungen rückführbare Fluidmenge gesondert regelbar ist. Die Kühleinrichtung nach der jeweiligen Verdichtungseinrichtung, nach der Bypassleitung abzweigt, führt zu einem größeren Dichteunterschied und ermöglicht so eine größere Rückfuhr an Fluid.

Günstigerweise ist beim Verfahren vorgesehen, dass die um die erste Verdichtungseinrichtung zurückgeführte Fluidmenge und die um die zweite Verdichtungseinrichtung zurückgeführte Fluidmenge gesondert angepasst werden. Im einfachsten Fall kann dafür vorgesehen sein, dass um jede Verdichtungseinrichtung eine Bypassleitung führt.

In einer Ausführungsvariante kann vorgesehen sein, dass um die erste Verdichtungseinrichtung eine Bypassleitung führt, in der ein regelbares Ventil angeordnet ist und dass um die zweite Verdichtungseinrichtung eine Bypassleitung führt, in der ein regelbares Ventil angeordnet ist, wobei auf die Motorregelgröße durch einen Regeleingriff an den wenigstens zwei Ventilen nachgeführt wird.

Weiters kann vorgesehen sein, dass auf die Motorregelgröße zusätzlich durch einen Regeleingriff an der Drosseleinrichtung nachgeführt wird. Um die Regelung noch mehr zu verfeinern, kann schließlich vorgesehen sein, dass die Verdichtungseinrichtungen von einer Abgasturbine angetrieben werden, wobei um zumindest eine Abgasturbine eine Bypassleitung führt, wobei zur Regelung auf die Motorregelgröße zusätzlich die an der Abgasturbine vorbeigeführte Fluidmenge mit einem regulierbaren Ventil geregelt wird.

Bei der Brennkraftmaschine kann in einer Ausführungsvariante vorgesehen sein, dass die Brennkraftmaschine wenigstens in zwei Betriebszuständen betreibbar ist, wobei im ersten Betriebszustand um jede Verdichtungseinrichtung eine bestimmte Fluidmenge umwälzbar ist, wobei in einem zweiten Betriebszustand das Verhältnis der um die erste Verdichtungseinrichtung umwälzbaren Menge zur um die zweite Verdichtungseinrichtung umwälzbaren Menge gegenüber dem ersten Betriebszustand verändert ist. In einer weiteren Ausführungsvariante kann eine Regeleinrichtung vorgesehen sein, mit der die Brennkraftmaschine auf die Motorregelgröße nachgeführt wird, wobei zur Nachführung auf die Motorregelgröße im Betriebszustand durch Regeln der in den Bypassleitungen angeordneten regelbaren Ventilen die um jede Verdichtungseinrichtung umwälzbare Fluidmenge gesondert veränderbar ist. Im einfachsten Fall kann dabei vorgesehen sein, dass die erste Verdichtungseinrichtung durch eine Bypassleitung mit einem darin angeordneten regulierbaren Ventil überbrückt wird und dass die zweite Verdichtungseinrichtung durch eine Bypassleitung mit einem darin angeordneten regulierbaren Ventil überbrückt wird. Die Überbrückung erfolgt derart, dass die Verdichtungseinrichtungen in Strömungsrichtung antiparallel überbrückt werden, d.h., dass aus der Verdichtungseinrichtung austretendes verdichtetes Fluid wieder zum Fluideinlass der Verdichtungseinrichtung zurückgeführt wird.

In einer alternativen Ausführungsvariante kann vorgesehen sein, dass die erste Verdichtungseinrichtung und die zweite Verdichtungseinrichtung durch eine Bypassleitung mit zwei darin seriell angeordneten Ventilen überbrückt wird, wobei zwischen den beiden Ventilen eine Leitung abzweigt, die zwischen den beiden in Serie geschalteten Verdichtungseinrichtungen mündet und in der ein steuerbares Ventil angeordnet ist. Auch hier ist vorgesehen, dass die Bypassleitungen die Verdichtungseinrichtungen in Strömungsrichtung der Verdichtungseinrichtungen antiparallel überbrücken.

Zur Verbesserung der Regelcharakteristika kann weiters vorgesehen sein, dass die Verdichtungseinrichtungen von zumindest einer Abgasturbine angetrieben werden, wobei um zumindest eine Abgasturbine eine Bypassleitung führt und wobei zur Regelung auf die Motorregelgröße zusätzlich die um die Abgasturbine umgewälzte Fluidmenge mit einem regulierbaren Ventil geregelt wird. Auch in diesem Fall kann vorgesehen sein, dass zwei in Serie geschaltete Abgasturbinen vorgesehen sind, die jeweils eine Verdichtungseinrichtung antreiben, wobei um die erste Abgasturbine und um die zweite Abgasturbine Bypassleitungen führen, wobei in den Bypassleitungen regelbare Ventile angeordnet sind, sodass die um jede Abgasturbine in den Bypassleitungen vorbeigeführte Fluidmenge gesondert regelbar ist. Im einfachsten Fall ist dabei vorgesehen, dass die erste Abgasturbine durch eine Bypassleitung mit einem darin angeordneten regulierbaren Ventil parallel überbrückt wird und dass die zweite Abgasturbine durch eine Bypassleitung mit einem darin angeordneten regulierbaren Ventil parallel überbrückt wird. Alternativ dazu kann vorgesehen sein, dass die erste Abgasturbine und die zweite Abgasturbine durch eine Bypassleitung mit zwei darin seriell angeordneten Ventilen parallel überbrückt wird, wobei zwischen den beiden Ventilen eine Leitung abzweigt, die zwischen den beiden in Serie geschalteten Abgasturbinen mündet und in der ein steuerbares Ventil angeordnet ist. In einer Variante kann vorgesehen sein, dass für die Ventile eine gemeinsame Regeleinrichtung vorgesehen ist.

Im bevorzugten Fall handelt es sich bei der Brennkraftmaschine um eine stationäre Brennkraftmaschine, wie sie beispielsweise in stationären Kraftanlagen Einsatz finden. Stationäre Kraftanlagen weisen in der Regel eine Brennkraftmaschine und einen elektrischen Generator zur elektrischen Stromerzeugung auf.

Weiters kann es sich bei der, vorzugsweise stationären, Brennkraftmaschine um einen Gasmotor handeln, d.h. um einen Verbrennungsmotor, der ein einen gasförmigen Treibstoff wie Methan verbrennt. Besonders bevorzugt handelt es sich um einen gemischaufgeladenen Gasmotor. Bei gemischaufgeladenen Gasmotoren wird als Fluid nicht reine Luft, sondern ein Treibstoff/Luftgemisch in den Verdichtungseinrichtungen verdichtet. Beispielsweise kann es sich in einer Ausführungsvariante um einen ottomotorischen, d.h. fremdgezündeten Verbrennungsmotor handeln.

In einer Ausführungsvariante kann vorgesehen sein, dass die Motorregelgröße ein im Wesentlichen konstanter Motorparameter ist. Hierfür kommen beispielsweise eine konstante Drehzahl oder eine konstante Ausgangsleistung in Frage.

Weitere Vorteile und Details der Erfindung werden anhand der nachfolgenden Figuren sowie der Figurenbeschreibungen erläutert.

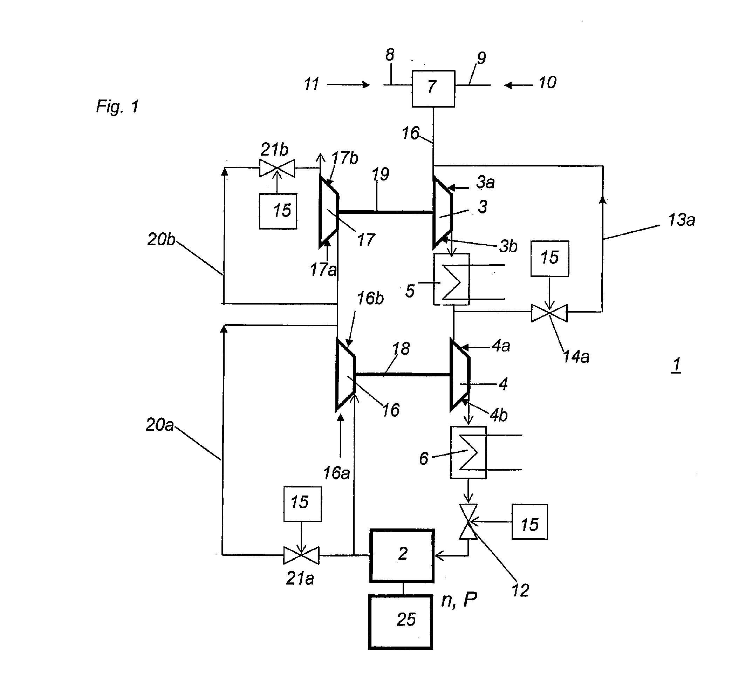

Die Fig. 1 bis 5 zeigen schematisch fünf Ausführungsvarianten erfindungsgemäßer Brennkraftmaschinen.

In der Fig. 1 ist schematisch ein Ausführungsbeispiel für eine erfindungsgemäße Brennkraftmaschine 1 zur Durchführung des Verfahrens gezeigt. Die Brennkraftmaschine 1 weist den eigentlichen Verbrennungsmotor 2 auf, der beispielsweise ein Gasmotor ist. Das bedeutet, dass gasförmiger Brennstoff, wie z.B. Methan oder Deponiegas bzw. Biogas in den jeweiligen Brennräumen des Verbrennungsmotors 2 verbrannt wird. Im bevorzugten Fall ist vorgesehen, dass der Verbrennungsmotor 2 ein stationärer Verbrennungsmotor 2 ist, der beispielsweise zur Stromerzeugung unter Zuhilfenahme eines Generators 25 dient.

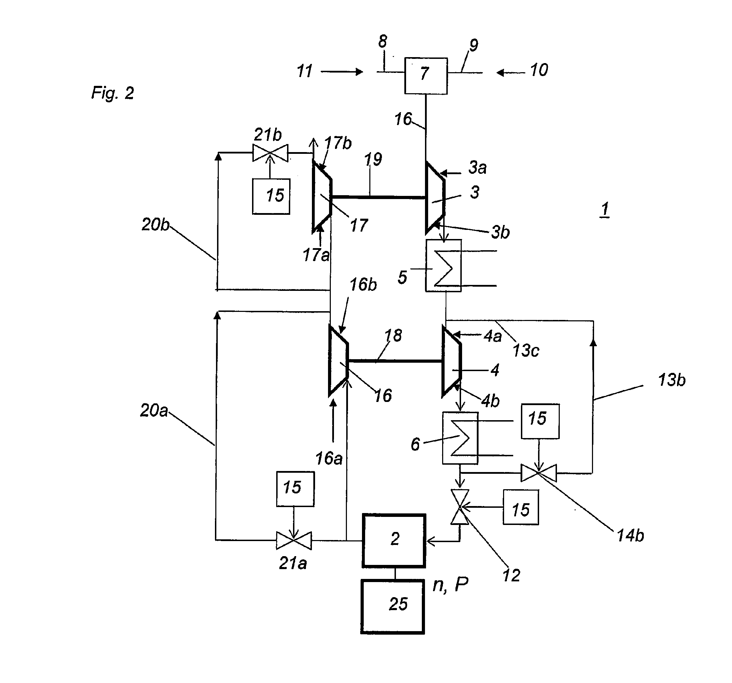

Zunächst wird einem Gasmischer 7 über eine Luftzufuhrleitung 9 Luft 10 und über eine Gaszufuhrleitung 8 ein Treibgas 11, beispielsweise Methan, zugeführt. Luft 9 und Treibgas 11 werden im Gasmischer 7 zu einem Gasgemisch vermischt und der ersten Verdichtungseinrichtung 3 ("Niederdruckverdichter") zugeführt. Dabei tritt das Gasgemisch über einen Fluideinlass 3a in die Verdichtungseinrichtung 3 ein, wird darin verdichtet und tritt über einen Fluidauslass 3b aus der Verdichtungseinrichtung aus. Anschließend wird das verdichtete Treibstoff-Luft-Gemisch in einer Kühleinrichtung 5 abgekühlt und zur zweiten Verdichtungseinrichtung 4 ("Hochdruckverdichter") geführt. Diese ist zur ersten Verdichtungseinrichtung 3 in Serie geschalten. Das in der ersten Verdichtungseinrichtung 3 vorverdichtete Gas wird nun über den Fluideinlass 4a in die Verdichtungseinrichtung 4 ("Hochdruckverdichter") eingelassen, dort verdichtet und tritt über den Fluidauslass 4b aus der Verdichtungseinrichtung 4 aus. Anschließend wird das nun hochverdichtete Gemisch (Drücke über 6 bar möglich) über eine weitere Kühleinrichtung 6 gekühlt. Über eine Drosseleinrichtung 12, beispielsweise eine Drosselklappe, wird nun abschließend die Menge an Gasgemisch reguliert, die dem Verbrennungsmotor 2 zugeführt wird. Die Beschreibung bisher trifft für alle fünf Ausführungsbeispiele zu, sodass für die Beschreibung der Fig. 2 bis 5 auf die bisherige Figurenbeschreibung verwiesen wird.

In der Fig. 1 führt um die erste Verdichtungseinrichtung 3 eine erste Bypassleitung 13a herum, in der ein erstes Ventil 14a, ein sogenanntes Umblaseventil 14a angeordnet ist. Durch die Bypassleitung 13a kann ständig eine gewisse Gasmenge des verdichteten Gas-Luft-Gemischs um die Verdichtungseinrichtung 3 umgeblasen, d.h., zurückgeführt werden. Konkret wird also ein Teil des von der ersten Verdichtungseinrichtung 3 verdichteten Gasgemisches vom Fluidauslass 3b (via Kühleinrichtung bzw. Gemischkühler 5) zurück zum Fluideinlass 3a geführt.

In der Fig. 2 führt im Gegensatz zur Variante der Fig. 1 nicht um die erste, sondern um die zweite Verdichtungseinrichtung 4 eine erste Bypassleitung 13b herum, in der ein Ventil 14b, ein sogenanntes Umblaseventil 14b angeordnet ist. Durch die Bypassleitung 13b kann ständig eine gewisse Gasmenge des verdichteten Gas-Luft-Gemischs um die zweite Verdichtungseinrichtung 4 umgeblasen, d.h., zurückgeführt
werden. Hier wird also ein Teil des von der ersten Verdichtungseinrichtung 4 verdichteten Gasgemisches vom Fluidauslass 4b (via Kühleinrichtung bzw. Gemischkühler 6) zurück zum Fluideinlass 4a geführt.

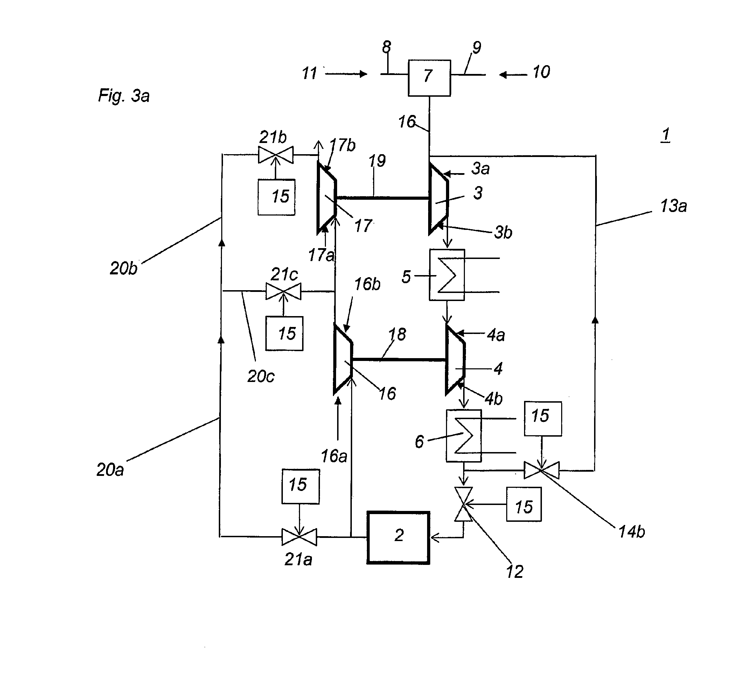

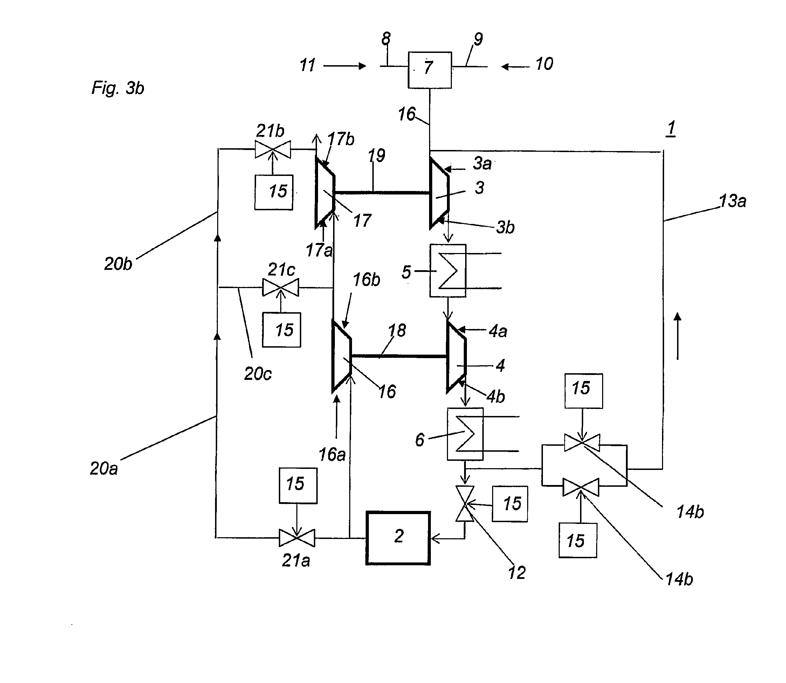

In der Fig. 3a und 3b sind weitere Ausführungsvarianten gezeigt. Dabei führt um erste Verdichtungseinrichtung 3 und zweite Verdichtungseinrichtung 4 eine gemeinsame Bypassleitung 13a herum, in der das Ventil 14b, wiederum ein sogenanntes Umblaseventil 14b angeordnet ist. Durch die Bypassleitung 13a kann ständig eine gewisse Gasmenge des verdichteten Gas-Luft-Gemischs um beide Verdichtungseinrichtungen 3, 4 umgeblasen, d.h., zurückgeführt werden. Ein Teil des von der ersten Verdichtungseinrichtung 3 und von der zweiten Verdichtungseinrichtung 4 verdichteten Gasgemisches wird vom Fluidauslass 4b zurück zum Fluideinlass 3a geführt.

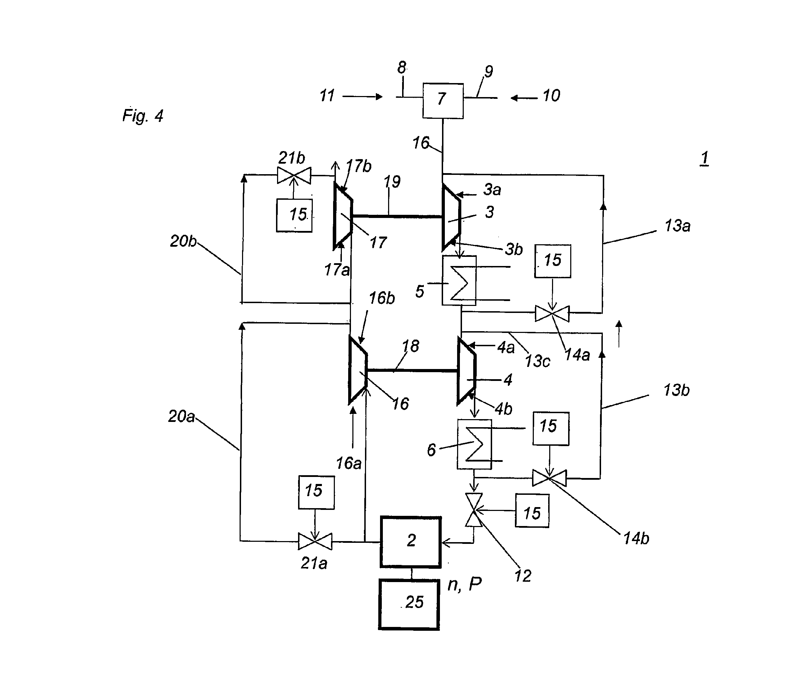

In der Ausführungsvariante der Fig. 4 führt um die erste Verdichtungseinrichtung 3 eine erste Bypassleitung 13a herum, in der ein erstes Ventil 14a, ein sogenanntes Umblaseventil 14a angeordnet ist. Um die zweite Verdichtungseinrichtung 4 führt eine zweite Bypassleitung 13b mit einem zweiten Umblaseventil 14b herum. Durch die Bypassleitungen 13a, 13b kann also ständig eine gewisse Gasmenge des verdichteten Gas-Luft-Gemischs um die jeweilige Verdichtungseinrichtung 3, 4 umgeblasen, d.h., zurückgeführt werden. Konkret wird also ein Teil des von der ersten Verdichtungseinrichtung 3 verdichteten Gasgemisches vom Fluidauslass 3b (via Gemischkühler 5) zurück zum Fluideinlass 3a geführt. Außerdem wird ein Teil des von der zweiten Verdichtungseinrichtung 4 verdichteten Gasgemisches vom Fluidauslass 4b (via Gemischkühler 6) zurück zum Fluideinlass 4a geführt.

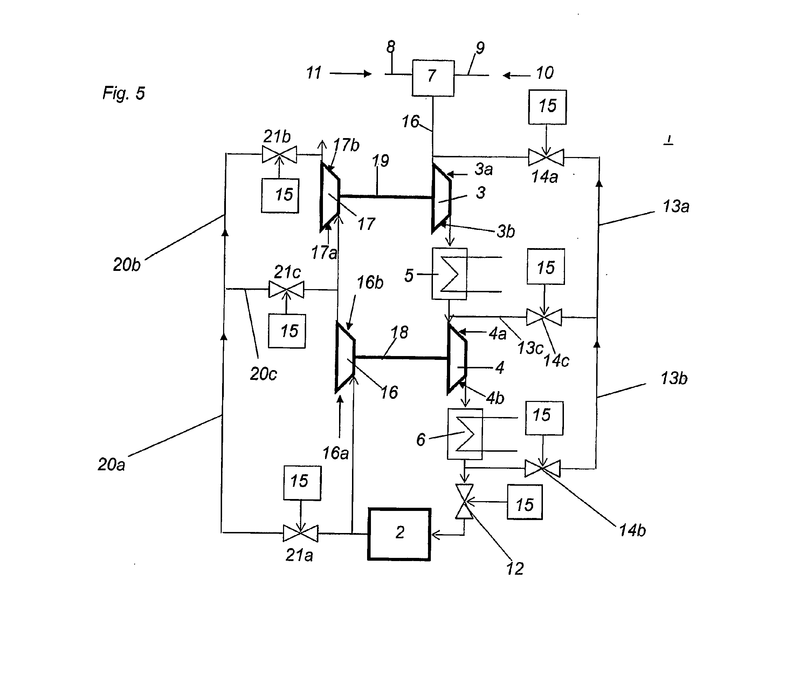

Während in der Fig. 4 zwei serielle Verdichtungseinrichtungen 3, 4 gezeigt sind, um die jeweils eine Bypassleitung 13a bzw. 13b herumführt (und zwar in antiparalleler Strömungsrichtung, wie aus den Strömungspfeilen erkennbar ist) mit jeweils einem Ventil 14a, 14b, ist in der Fig. 5 eine Variante gezeigt, bei der um die in Serie geschalteten Verdichtungseinrichtungen 3, 4 zwei in Serie geschaltete Ventile 14a, 14b vorgesehen sind. Zwischen den beiden Ventilen 14a, 14b kommt es in der Bypassleitung 13a, 13b zu einer Abzweigung über die Leitung 13c, die zwischen den beiden Verdichtungseinrichtungen 3, 4 im Einlasstrakt mündet.

Der wesentlichste Unterschied im Vergleich zum Ausführungsbeispiel der Fig. 4 besteht darin, dass in im Beispiel der Fig. 5 eine Umblasung oder Rückführung des verdichteten Fluids direkt von der Fluidauslassseite 4b des zweiten Verdichters 4 in Richtung Fluideinlass 3a der ersten Verdichtungseinrichtung 3 vorgenommen werden kann. In diesem Fall kann die Umblasung über beide Verdichtungseinrichtungen erfolgen oder nur über einen durch entsprechende Betätigung der einzelnen Ventile 14a, 14b und 14c. Da die übrigen Bauteile identisch sind zum Beispiel der vorangegangenen Figuren, sodass auch hier nicht näher darauf eingegangen werden muss.

Den gezeigten Ausführungsbeispielen der Fig. 1 bis 5 gemeinsam ist, dass die Ventile 14a, 14b, 14c (soweit sie vorhanden sind) in der jeweiligen Bypassleitung 13a, 13b, 13c (ebenfalls soweit vorhande) sind nun mit einem Regler 15 einer Regeleinrichtung verbunden. Der Übersichtlichkeit halber wurde bei jedem Ventil 14a, 14b, 14c ein einzelner Regler 15 abgebildet, die gemeinsam eine Regeleinrichtung bilden.

Der Betriebszustand soll anhand der Fig. 4 näher erläutert werden. Wie bereits erwähnt wird Luft 9 und Treibgas 8 im Gasmischer 7 gemischt, im Niederdruckmischer 3 verdichtet und anschließend im Gemischkühler 5 gekühlt. Ein Teil des Gemisches wird über die Bypassleitung 13a umgeblasen, d.h. zum Fluideinlass 3a zurückgeführt, während ein anderer Teil des Gemischs in den Hochdruckverdichter 4 eingeleitet wird. Im Hochdruckverdichter 4 wird weiter verdichtet, anschließend im Kühler 6 gekühlt und ein Teil des Gemischs wird mit der Bypassleitung 13b umgeblasen und zwischen den beiden Verdichtungseinrichtungen 3, 4 am Fluideinlass 4a der zweiten Verdichtungseinrichtung umgeblasen. Der übrige Teil des Gemisches wird in den Brennraum des Verbrennungsmotors 2 eingelassen. Eine abschließende mengenmäßige Regulierung der Gemischzufuhr kann über die Drosselklappe 12 erfolgen.

Bei geänderten Verhältnissen am Motor wie z.B. einer Laständerung kann nun, um auf eine bestimmte Motorregelgröße (wie z.B. einen konstanten Motorparameter, beispielsweise eine konstante Drehzahl n oder eine konstante Ausgangsleistung P) zu regeln, die zugeführte Treibstoffmenge kurzerhand über einen Regeleingriff an den Ventilen 14a und 14b angepasst werden. Bei sehr starken Laständerungen werden beide Ventile 14a und 14b betätigt, sodass die um beide Verdichtungseinrichtungen 3, 4 umgeblasene bzw. rückgeführte Fluidmenge verändert wird. Bei weniger starken Laständerungen reicht es in der Regel, nur ein Ventil 14a, 14b zu betätigen. Über die Betätigung des Ventils 14a können besonders günstig Schwankungen vermieden werden, da hier die umgeblasene Menge geringer ist, sodass der Verbrennungsmotor 2 langsamer eine größere oder geringere Menge an verdichteten Gas zugeführt bekommt. Das Ventil 14b kann demgegenüber auf sehr rasche Laständerungen besser reagieren. Über die Drosselklappe 12 kann eine zusätzliche Regulierung erfolgen genauso wie über die Regulierung der Drehzahl der Verdichtungseinrichtung 3, 4, indem an der Abgasturbine 16 bzw. 17 eine Veränderung vorgenommen wird. Zu diesem Zweck kann über die Bypassleitungen 20a bzw. 20b in Betrieb ständig eine gewisse Abgasmenge zirkuliert werden. Auch hier können bei Laständerungen durch Betätigung der Ventile 21 a und 21 b Änderungen am Motor, wie z.B. eine geänderte Last oder eine veränderte Drehzahl durch mehr oder weniger Umblasen um die Verdichtungseinrichtungen 16, 17 vorgenommen werden.

Die Regelung der Beispiele der Fig. 1 und 2 erfolgt entsprechend, in vereinfachter Form, indem nur die umgeblasene Menge um eine Verdichtungseinrichtung 3 (Fig. 1) bzw. 4 (Fig. 2) geregelt wird. Die Regelung kann ansonsten analog erfolgen. Ähnliches gilt für die Varianten der Fig. 3a und Fig. 3b, bei denen um beide Verdichtungseinrichtungen 3, 4 herum geführt wird, dazwischen jedoch keine Abzweigung vorgesehen ist, sodass immer nur der Fluidauslass 4b mit dem Fluideinlass 3a verbunden ist. Die Ausführungsbeispiele der Fig. 3a und 3b sind bevorzugte Ausführungsbeispiele der Erfindung. Der Unterschied zwischen dem Beispiel der Fig. 3a und 3b liegt darin, dass in Fig. 3a eine Bypassleitung vorgesehen ist, bei der ein Regler 15 ein Ventil 14b regelt, während im Beispiel der Fig. 3b in der einen Bypassleitung 13a zwei parallel angeordnete Ventile 14b, 14b' vorgesehen sind. Ein Ventil 14b wird dabei wie im Beispiel der Fig. 3a geregelt über den Regler 15. Das zweite Ventil 14b' wird im Stellbetrieb betrieben, das heißt es wird nur in der Position offen bzw. zu betrieben und nicht kontinuierlich wie das Ventil 14b. Dies ermöglicht ein rascheres Eingreifen bei Laständerungen an der Brennkraftmaschine.

Die Regelung kann z.B. auch so erfolgen, dass im Betriebszustand ständig eine bestimmte Menge an Gas um beide Verdichtungseinrichtungen umgeblasen wird (siehe z.B. Fig. 5), indem z.B. die Ventile 14a, 14b geöffnet sind, während Ventil 14c geschlossen ist. Zur Regelung kann nunmehr eines der beiden Ventile 14a, 14b geschlossen werden und das Ventil 14c geöffnet werden. In Abhängigkeit von der Differenz von Sollwert zu Istwert wird entweder Ventil 14a oder 14b geschlossen. Das Beispiel der Fig. 5 eignet sich insbesondere, da hier die Regelstrategien der Varianten der Fig. 1, 2 und 3 zusätzlich realisierbar sind.

Bislang wurde nur der Einlasstrakt beschrieben. Im Folgenden soll auch noch kurz der Auslasstrakt, sowie sich daraus ergebende Regelstrategien erläutert werden. Wie aus den Fig. 1 bis 5 ersichtlich, handelt es sich bei den Verdichtungseinrichtungen 3, 4 um sogenannte Abgasturbolader. Diese werden durch eine Abgasturbine 16 bzw. 17 angetrieben, indem Abgas aus dem Verbrennungsmotor 2 am Fluideinlass 16a der Abgasturbine 16 eintritt, die Turbine 16 zum Drehen bringt und am Fluidauslass 16b wieder austritt. Die nun rotierende Turbine 16 treibt über die Welle 18 den Hochdruckverdichter 4 an. Das Abgas wird nun weitergeleitet zur in Serie geschalteten zweiten Abgasturbine 17, wo das Abgasfluid am Fluideinlass 17a in die Abgasturbine 17 eintritt und am Fluidauslass 17b endgültig ausgestoßen wird.

Um die Abgasturbine 16 führt nunmehr eine Bypassleitung 20a mit einem Ventil 21a herum. Um die Verdichtungseinrichtung 17 führt eine weitere Bypassleitung 20b mit einem Ventil 21b herum. Die Menge an um die Abgasturbine 16 bzw. 17 vorbeigeführtem Abgas kann über die beiden Ventile 21 a, 21 b geregelt werden (analog zu den Bypassventilen 14a, 14b). Diese sind ebenfalls über Regler 15 mit der Regeleinrichtung verbunden (Fig. 1, 2 und 4).

Bei den Ausführungsbeispielen der Fig. 3a und 3b und 5 ist im Abgastrakt die Anordnung der Ventile 21a und 21b geändert und ein zusätzliches Ventil 21c vorgesehen, indem also die Ventile 21a und 21b in Serie geschaltet sind und dazwischen eine Abzweigung 20c wegführt, die zwischen den beiden Abgasturbinen 16, 17 mündet.

Über entsprechende Regeleingriffe an der Ventilen 21 a, 21 b, 21 c kann zusätzlich zur Regelung über den Einlasstrakt, auch über den Auslasstrakt geregelt werden. Eine Kombination der einzelnen Einlasstraktvarianten der Fig. 1, 2 und 4 mit den Auslasstrakten der Fig. 3 und 5 sowie der Einlasstraktvarianten der Fig. 3 und 5 mit den Auslasstrakten der Fig. 1, 2 und 4 ist im Rahmen der Erfindung selbstverständlich auch vorgesehen und braucht hier nicht mehr im Detail erläutert werden.

## Patentansprüche

1. Verfahren zum Regeln einer Brennkraftmaschine (1), wobei auf eine Motorregelgröße nachgeführt wird, wobei die Brennkraftmaschine (1) wenigstens eine erste Verdichtungseinrichtung (3) und wenigstens eine zur ersten Verdichtungseinrichtung seriell angeordnete zweite Verdichtungseinrichtung (4) aufweist, die ein Fluid verdichten, **dadurch gekennzeichnet, dass** zur Nachführung auf die Motorregelgröße als Stellgröße eine bestimmte Fluidmenge um zumindest eine der zumindest zwei Verdichtungseinrichtung (3, 4) über wenigstens eine Bypassleitung (13a, 13b, 13c) zurückgeführt wird.

2. Verfahren nach Anspruch 1, **dadurch gekennzeichnet, dass** zur Nachführung auf die Motorregelgröße als Stellgröße eine bestimmte Fluidmenge um die zumindest zwei Verdichtungseinrichtungen (3, 4) über Bypassleitungen (13a, 13b, 13c) zurückgeführt wird.

3. Verfahren nach Anspruch 2, **dadurch gekennzeichnet, dass** die um die erste Verdichtungseinrichtung (3) zurückgeführte Fluidmenge und die um die zweite Verdichtungseinrichtung (4) zurückgeführte Fluidmenge gesondert angepasst werden.

4. Verfahren nach einem der Ansprüche 1 bis 3, **dadurch gekennzeichnet, dass** um jede Verdichtungseinrichtung (3, 4) eine Bypassleitung (13a, 13b, 13c) führt.

5. Verfahren nach einem der Ansprüche 1 bis 4, **dadurch gekennzeichnet, dass** um die erste Verdichtungseinrichtung (3) eine Bypassleitung (13a) führt, in der ein regelbares Ventil (14a) angeordnet ist und dass um die zweite Verdichtungseinrichtung (4) eine Bypassleitung (13b) führt, in der ein regelbares Ventil (14b) angeordnet ist, wobei auf die Motorregelgröße durch einen Regeleingriff an den wenigstens zwei Ventilen (14a, 14b) nachgeführt wird.

6. Verfahren nach einem der Ansprüche 1 bis 5, **dadurch gekennzeichnet, dass** auf die Motorregelgröße zusätzlich durch einen Regeleingriff an der Drosseleinrichtung (12) nachgeführt wird.

7. Verfahren nach einem der Ansprüche 1 bis 6, **dadurch gekennzeichnet, dass** die Verdichtungseinrichtungen (3, 4) von wenigstens einer Abgasturbine (16, 17) angetrieben werden, wobei um zumindest eine Abgasturbine (16, 17) eine Bypassleitung (20a, 20b, 20c) führt, wobei zur Regelung auf die Motorregelgröße zusätzlich an der Abgasturbine (16, 17) vorbeigeführte Fluidmenge mit einem regulierbaren Ventil (21a, 21b, 21c) geregelt wird.

8. Brennkraftmaschine (1), umfassend wenigstens eine erste Verdichtungseinrichtung (3) und wenigstens eine zweite Verdichtungseinrichtung (4), die zur ersten Verdichtungseinrichtung (3) seriell angeordnet ist, wobei um wenigstens eine Verdichtungseinrichtung (3, 4) zumindest eine Bypassleitung (13a, 13b, 13c) führt und wobei in der wenigstens einen Bypassleitung (13a, 13b, 13c) zumindest ein regelbares Ventil (14a, 14b, 14c) angeordnet ist, sodass die um die Verdichtungseinrichtung (3, 4) rückführbare Fluidmenge regelbar ist, wobei der wenigstens einen Verdichtungseinrichtung (3, 4) wenigstens eine Kühleinrichtung (5, 6) nachgeordnet ist.

9. Brennkraftmaschine (1) nach Anspruch 8, **dadurch gekennzeichnet, dass** um die erste Verdichtungseinrichtung (3) und um die zweite Verdichtungseinrichtung (4) Bypassleitungen (13a, 13b, 13c) führen und wobei in den Bypassleitungen (13a, 13b, 13c) regelbare Ventile (14a, 14b, 14c) angeordnet sind, sodass die um jede Verdichtungseinrichtung (3, 4) mittels der Bypassleitungen (13a, 13b 13c) rückführbare Fluidmenge gesondert regelbar ist.

10. Brennkraftmaschine (1) nach Anspruch 9, **dadurch gekennzeichnet, dass** die Brennkraftmaschine (1) wenigstens in zwei Betriebszuständen betreibbar ist, wobei im ersten Betriebszustand um jede Verdichtungseinrichtung (3, 4) eine bestimmte Fluidmenge rückführbar ist, wobei in einem zweiten Betriebszustand das Verhältnis der um die erste Verdichtungseinrichtung (3) rückführbaren Menge zur um die zweite Verdichtungseinrichtung (4) rückführbaren Menge gegenüber dem ersten Betriebszustand verändert ist.

11. Brennkraftmaschine (1) nach Anspruch 9 oder Anspruch 10, **gekennzeichnet durch** eine Regeleinrichtung (15), mit der die Brennkraftmaschine (1) auf eine Motorregelgröße nachgeführt wird, wobei zur Nachführung auf die Motorregelgröße im Betriebszustand als Stellgröße die um jede Verdichtungseinrichtung (3, 4) rückgeführte Fluidmenge gesondert mit den regelbaren Ventilen (14a, 14b, 14c) angepasst wird.

12. Brennkraftmaschine (1) nach einem der Ansprüche 9 bis 11, **dadurch gekennzeichnet, dass** die erste Verdichtungseinrichtung (3) durch eine Bypassleitung (13a) mit einem darin angeordneten regulierbaren Ventil (14a) parallel überbrückt wird und dass die zweite Verdichtungseinrichtung (4) durch eine Bypassleitung (13b) mit einem darin angeordneten regulierbaren Ventil (14b) parallel überbrückt wird.

13. Brennkraftmaschine (1) nach einem der Ansprüche 9 bis 11, **dadurch gekennzeichnet, dass** die erste Verdichtungseinrichtung (3) und die zweite Verdichtungseinrichtung (4) durch eine Bypassleitung (13a, 13b) mit zwei darin seriell angeordneten Ventilen (14a, 14b) parallel überbrückt wird, wobei zwischen den beiden Ventilen (14a, 14b) eine Leitung (13c) abzweigt, die zwischen den beiden in Serie geschalteten Verdichtungseinrichtungen (3, 4) mündet und in der ein steuerbares Ventil (14c) angeordnet ist.

14. Brennkraftmaschine (1) nach einem der Ansprüche 8 bis 13, **dadurch gekennzeichnet, dass** die Verdichtungseinrichtungen (3, 4) von zumindest einer Abgasturbine (16, 17) angetrieben werden, wobei um zumindest eine Abgasturbine (16, 17) eine Bypassleitung (20a, 20b, 20c) führt und wobei zur Nachführung auf die Motorregelgröße zusätzlich die an der Abgasturbine (16, 17) vorbeigeführte Fluidmenge mit einem regulierbaren Ventil (21a, 21b, 21 c) geregelt wird.

15. Brennkraftmaschine (1) nach Anspruch 14, **dadurch gekennzeichnet, dass** zwei in Serie geschaltete Abgasturbinen (16, 17) vorgesehen sind, die jeweils eine Verdichtungseinrichtung (3, 4) antreiben, wobei um die erste Abgasturbine (16) und um die zweite Abgasturbine (17) Bypassleitungen (20a, 20b, 20c) führen, wobei in den Bypassleitungen (20a, 20b, 20c) regelbare Ventile (21a, 21 b, 21c) angeordnet sind, sodass die an jeder Abgasturbine (16, 17) in den Bypassleitungen (20a, 20b, 20c) vorbeiführbare Fluidmenge gesondert regelbar ist.

16. Brennkraftmaschine (1) nach Anspruch 15, **dadurch gekennzeichnet, dass** die erste Abgasturbine (16) durch eine Bypassleitung (20a) mit einem darin angeordneten regulierbaren Ventil (21 a) parallel überbrückt wird und dass die zweite Abgasturbine (17) durch eine Bypassleitung (20b) mit einem darin angeordneten regulierbaren Ventil (21 b) parallel überbrückt wird.

17. Brennkraftmaschine (1) nach Anspruch 16, **dadurch gekennzeichnet, dass** die erste Abgasturbine (16) und die zweite Abgasturbine (17) durch eine Bypassleitung (20c, 20b) mit zwei darin seriell angeordneten Ventilen (21a, 21 b) parallel überbrückt wird, wobei zwischen den beiden Ventilen (21 a, 21b) eine Leitung (20c) abzweigt, die zwischen den beiden in Serie geschalteten Abgasturbinen (16, 17) mündet und in der ein steuerbares Ventil (21c) angeordnet ist.

## Claims

1. A method of regulating an internal combustion engine (1), involving tracking setting to an engine regulating parameter, wherein the internal combustion engine (1) has at least one first compressor device (3) and at least one second compressor device (4) arranged serially in relation to the first compressor device, which compress a fluid, **characterised in that** for tracking setting to the engine regulating parameter as a control parameter a given amount of fluid is returned around at least one of the at least two compressor devices (3, 4) by way of at least one bypass conduit (13a, 13b, 13c).

2. A method as set forth in claim 1 **characterised in that** for tracking setting to the engine regulating parameter as the control parameter a given amount of fluid is returned around the at least two compressor devices (3, 4) by way of bypass conduits (13a, 13b, 13c).

3. A method as set forth in claim 2 **characterised in that** the amount of fluid returned around the first compressor device (3) and the amount of fluid returned around the second compressor device (4) are separately adapted.

4. A method as set forth in one of claims 1 through 3 **characterised in that** a bypass conduit (13a, 13b, 13c) passes around each compressor device (3, 4).

5. A method as set forth in one of claims 1 through 4 **characterised in that** a bypass conduit (13a) in which a regulatable valve (14a) is arranged passes around the first compressor device (3) and a bypass conduit (13b) in which a regulatable valve (14b) is arranged passes around the second compressor device (4), wherein tracking setting to the engine regulating parameter is effected by regulating intervention at the at least two valves (14a, 14b).

6. A method as set forth in one of claims 1 through 5 **characterised in that** tracking setting to the engine regulating parameter is additionally effected by regulating intervention at the throttle device (12).

7. A method as set forth in one of claims 1 through 6 **characterised in that** the compressor devices (3, 4) are driven by at least one exhaust gas turbine (16, 17), wherein a bypass conduit (20a, 20b, 20c) passes around at least one exhaust gas turbine (16, 17), wherein for regulation to the engine regulating parameter the amount of fluid which is taken past the exhaust gas turbine (16, 17) is additionally regulated with a regulatable valve (21 a, 21 b, 21 c).

8. An internal combustion engine (1) including at least one first compressor device (3) and at least one second compressor device (4) arranged serially in relation to the first compressor device (3), wherein at least one bypass conduit (13a, 13b, 13c) passes around at least one compressor device (3, 4) and wherein at least one regulatable valve (14a, 14b, 14c) is arranged in the at least one bypass conduit (13a, 13b, 13c) so that the amount of fluid which can be recycled around the compressor device (3, 4) is regulatable, wherein at least one cooling device (5, 6) is arranged downstream of the at least one compressor device (3, 4).

9. An internal combustion engine (1) as set forth in claim 8 **characterised in that** bypass conduits (13a, 13b, 13c) pass around the first compressor device (3) and around the second compressor device (4) and wherein regulatable valves (14a, 14b, 14c) are arranged in the bypass conduits (13a, 13b, 13c) so that the amount of fluid which can be recycled around each compressor device (3, 4) by means of the bypass conduits (13a, 13b, 13c) is separately regulatable.

10. An internal combustion engine (1) as set forth in claim 9 **characterised in that** the internal combustion engine (1) is operable in at least two operating modes, wherein in the first operating mode a given amount of fluid can be recycled around each compressor device (3, 4), and wherein in a second operating mode the ratio of the amount which can be recycled around the first compressor device (3) is altered in relation to the amount which can be recycled around the second compressor device (4) with respect to the first operating mode.

11. An internal combustion engine (1) as set forth in claim 9 or claim 10 **characterised by** a regulating device (15) with which the internal combustion engine (1) is trackingly set to an engine regulating parameter, wherein for tracking setting to the engine regulating parameter in the operating mode as a control parameter the amount of fluid recycled around each compressor device (3, 4) is adapted separately with the regulatable valves (14a, 14b, 14c).

12. An internal combustion engine (1) as set forth in one of claims 9 through 11 **characterised in that** the first compressor device (3) is bridged over in parallel by a bypass conduit (13a) with a regulatable valve (14a) arranged therein and the second compressor device (4) is bridged over in parallel by a bypass conduit (13b) with a regulatable valve (14b) arranged therein.

13. An internal combustion engine (1) as set forth in one of claims 9 through 11 **characterised in that** the first compressor device (3) and the second compressor device (4) are bridged over in parallel by a bypass conduit (13a, 13b) with two valves (14a, 14b) arranged serially therein, wherein branching off between the two valves (14a, 14b) is a conduit (13c) which opens between the two series-connected compressor devices (3, 4) and in which a controllable valve (14c) is arranged.

14. An internal combustion engine (1) as set forth in one of claims 8 through 13 **characterised in that** the compressor devices (3, 4) are driven by at least one exhaust gas turbine (16, 17), wherein a bypass conduit (20a, 20b, 20c) passes around at least one exhaust gas turbine (16, 17) and wherein for tracking setting to the engine regulating parameter in addition the amount of fluid which is taken past the exhaust gas turbine (16, 17) is regulated with a regulatable valve (21 a, 21 b, 21 c).

15. An internal combustion engine (1) as set forth in claim 14 **characterised in that** there are provided two series-connected exhaust gas turbines (16, 17) which each drive a respective compressor device (3, 4), wherein bypass conduits (20a, 20b, 20c) pass around the first exhaust gas turbine (16) and around the second exhaust gas turbine (17), wherein regulatable valves (21 a, 21 b, 21 c) are arranged in the bypass conduits (20a, 20b, 20c) so that the amount of fluid which can be taken past each exhaust gas turbine (16, 17) in the bypass conduits (20a, 20b, 20c) can be separately regulated.

16. An internal combustion engine (1) as set forth in claim 15 **characterised in that** the first exhaust gas turbine (16) is bridged over in parallel by a bypass conduit (20a) with a regulatable valve (21a) arranged therein and the second exhaust gas turbine (17) is bridged over in parallel by a bypass conduit (20b) with a regulatable valve (21 b) arranged therein.

17. An internal combustion engine (1) as set forth in claim 16 **characterised in that** the first exhaust gas turbine (16) and the second exhaust gas turbine (17) are bridged over in parallel by a bypass conduit (20c, 20b) with two valves (21a, 21b) arranged serially therein, wherein branching off between the two valves (21 a, 21 b) is a conduit (20c) which opens between the two series-connected exhaust gas turbines (16, 17) and in which a controllable valve (21 c) is arranged.

## Revendications

1. Procédé de régulation d'un moteur à combustion interne (1), un ajustement à une grandeur de régulation du moteur étant effectué, le moteur à combustion interne (1) présentant au moins un premier dispositif de compression (3) et au moins un deuxième dispositif de compression (4), disposé en série avec le premier dispositif de compression, qui compriment un fluide, **caractérisé en ce que**, pour l'ajustement à la la grandeur de régulation du moteur en tant que grandeur de réglage, une quantité de fluide définie est ramenée en contournant au moins un des au moins deux dispositifs de compression (3, 4) par le biais d'au moins une conduite de dérivation (13a, 13b, 13c).

2. Procédé selon la revendication 1, **caractérisé en ce que**, pour l'ajustement à la grandeur de régulation du moteur en tant que grandeur de réglage, une quantité de fluide définie est ramenée en contournant au moins les au moins deux dispositifs de compression (3, 4) par le biais de conduites de dérivation (13a, 13b, 13c).

3. Dispositif selon la revendication 2, **caractérisé en ce que** la quantité de fluide définie ramenée en contournant le premier dispositif de compression (3) et la quantité de fluide ramenée en contournant le deuxième dispositif de compression (4) sont adaptées séparément.

4. Dispositif selon une des revendications 1 à 3, **caractérisé en ce qu'**une conduite de dérivation (13a, 13b, 13c) contourne chaque dispositif de compression (3, 4).

5. Dispositif selon une des revendications 1 à 4, **caractérisé en ce qu'**une conduite de dérivation (13a) contourne le premier dispositif de compression (3), dans laquelle est disposée une vanne (14a) pouvant être régulée, et **en ce qu'**une conduite de dérivation (13b) contourne le deuxième dispositif de compression (4), dans laquelle est disposée une vanne (14b) pouvant être régulée, un ajustement à la grandeur de régulation du moteur étant effectué par une intervention de régulation sur les au moins deux vannes (14a, 14b).

6. Dispositif selon une des revendications 1 à 5, **caractérisé en ce qu'**un ajustement à la grandeur de régulation du moteur est également effectué par une intervention de régulation sur le dispositif d'étranglement (12).

7. Dispositif selon une des revendications 1 à 6, **caractérisé en ce que** les dispositifs de compression (3, 4) sont entraînés par au moins une turbine sur les gaz d'échappement (16, 17), une conduite de dérivation (20a, 20b, 20c) contournant au moins une turbine de gaz d'échappement (16, 17), la quantité de fluide passant devant la turbine de gaz d'échappement (16, 17) étant en plus régulée avec une vanne pouvant être régulée (21 a, 21 b, 21 c) pour la régulation de la grandeur de régulation du moteur.

8. Moteur à combustion interne (1), comprenant au moins un premier dispositif de compression (3) et au moins un deuxième dispositif de compression (4) qui est disposé en série avec le premier dispositif de compression (3), au moins une conduite de dérivation (13a, 13b, 13c) contournant au moins un dispositif de compression (3, 4), et au moins une vanne (14a, 14b, 14c) pouvant être régulée étant disposée dans la conduite de dérivation (13a, 13b, 13c) au moins au nombre de un de telle sorte que la quantité de fluide pouvant être ramenée en contournant le dispositif de compression (3, 4) peut être régulée, au moins un dispositif de refroidissement (5, 6) étant disposé en aval du dispositif de compression (3, 4) au moins au nombre de un.

9. Moteur à combustion interne (1) selon la revendication 8, **caractérisé en ce que** des conduites de dérivation (13a, 13b, 13c) contournent le premier dispositif de compression (3) et le deuxième dispositif de compression (4), et des vannes (14a, 14b, 14c) pouvant être régulées étant disposées dans les conduites de dérivation (13a, 13b, 13c) de telle sorte que la quantité de fluide pouvant être ramenée en contournant chaque dispositif de compression (3, 4) au moyen des conduites de dérivation (13a, 13b, 13c) peut être régulée séparément.

10. Moteur à combustion interne (1) selon la revendication 9, **caractérisé en ce que** le moteur à combustion interne (1) peut être mis en fonctionnement dans deux états de fonctionnement, une quantité de fluide définie pouvant, dans le premier état de fonctionnement, être ramenée en contournant chaque dispositif de compression (3, 4), le rapport de la quantité pouvant être ramenée en contournant le premier dispositif de compression (3) à la quantité pouvant être ramenée en contournant le deuxième dispositif de compression (4) étant, dans un deuxième état de fonctionnement, modifié par rapport au premier état de fonctionnement.

11. Moteur à combustion interne (1) selon la revendication 9 ou la revendication 10, **caractérisé par** un dispositif de régulation (15) avec lequel un ajustement à une grandeur de régulation du moteur du moteur à combustion interne (1) en tant que grandeur de réglage est effectué, la quantité de fluide ramenée en contournant chaque dispositif de compression (3, 4) étant adaptée séparément avec les vannes (14a, 14b, 14c) pouvant être régulées, pour l'ajustement à la grandeur de régulation du moteur dans l'état de fonctionnement.

12. Moteur à combustion interne (1) selon une des revendications 9 à 11, **caractérisé en ce que** le premier dispositif de compression (3) est ponté par une conduite de dérivation (13a) parallèlement à une vanne (14a) pouvant être régulée qui est disposée à l'intérieur, et **en ce que** le deuxième dispositif de compression (4) est ponté par une conduite de dérivation (13b) parallèlement à une vanne (14b) pouvant être régulée qui est disposée à l'intérieur.

13. Moteur à combustion interne (1) selon une des revendications 9 à 11, **caractérisé en ce que** le premier dispositif de compression (3) et le deuxième dispositif de compression (4) sont pontés par une conduite de dérivation (13a, 13b) parallèlement à deux vannes (14a, 14b) qui sont disposées en série à l'intérieur, une conduite (13c) bifurquant entre les deux vannes (14a, 14b) et débouchant entre les deux dispositifs de compression (3, 4) montés en série, conduite dans laquelle est disposée une vanne (14c) qui peut être commandée.

14. Moteur à combustion interne (1) selon une des revendications 8 à 13, **caractérisé en ce que** les dispositifs de compression (3, 4) sont entraînés par au moins une turbine de gaz d'échappement (16, 17), une conduite de dérivation (20a, 20b, 20c) contournant au moins une turbine de gaz d'échappement (16, 17) et la quantité de fluide passant devant la turbine sur les gaz d'échappement (16, 17) étant en plus régulée avec une vanne (21 a, 21 b, 21 c) pouvant être régulée, pour l'ajustement à la grandeur de régulation du moteur.

15. Moteur à combustion interne (1) selon la revendication 14, **caractérisé en ce qu'**il est prévu deux turbines de gaz d'échappement (16, 17) montées en série qui entraînent chacune un dispositif de compression (3, 4), des conduites de dérivation (20a, 20b, 20c) contournant la première turbine de gaz d'échappement (16) et la deuxième turbine de gaz d'échappement (17), des vannes (21 a, 21 b, 21 c) pouvant être régulées étant disposées dans les conduites de dérivation (20a, 20b, 20c) de telle sorte que la quantité de fluide pouvant passer devant chaque turbine de gaz d'échappement (16, 17) dans les conduites de dérivation (20a, 20b, 20c) peut être régulée de façon séparée.

16. Moteur à combustion interne (1) selon la revendication 15, **caractérisé en ce que** la première turbine sur les gaz d'échappement (16) est pontée par une conduite de dérivation (20a) parallèlement à une vanne (21 a) pouvant être régulée qui est disposée à l'intérieur, et **en ce que** la deuxième turbine de gaz d'échappement (17) est pontée par une conduite de dérivation (20b) parallèlement à une vanne (21 b) pouvant être régulée qui est disposée à l'intérieur.

17. Moteur à combustion interne (1) selon la revendication 16, **caractérisé en ce que** la première turbine de gaz d'échappement (16) et la deuxième turbine de gaz d'échappement (17) est pontée par une conduite de dérivation (20c, 20b) parallèlement à deux vannes (21 a, 21 b) disposées en série à l'intérieur, une conduite (20c) bifurquant entre les deux vannes (21 a, 21 b) et débouchant entre les deux turbines de gaz d'échappement (16, 17) montées en série, conduite dans laquelle est disposée une vanne (21c) qui peut être commandée.
